# EUROPEAN PATENT SPECIFICATION

(11) **EP 2 325 922 B1**
(45) Date of publication and mention of the grant of the patent: **09.05.2012**
(21) Application number: 10174073.6
(22) Date of filing: 26.08.2010
(51) Int. Cl.: H01M 2/10, H01M 2/12, H01M 2/02

(54) **Battery pack**
Batteriepack
Bloc-batterie

(30) Priority: 19.11.2009 US 272930 P
(43) Date of publication of application: 25.05.2011
(73) Proprietor: SB LiMotive Co., Ltd., Yongin-si Gyeonggi-do (KR)
(72) Inventor: Lee, Hyun-Ye, Gyeonggi-do (KR); Kim, Tae-Yong, Gyeonggi-do (KR); Kim, Myung-Chul, Gyeonggi-do (KR); Park, Shi-Dong, Gyeonggi-do (KR)
(74) Representative: Gulde Hengelhaupt Ziebig & Schneider

(56) References cited:
- EP-A1- 1 775 784
- JP-A- 2005 285 516

## Description

### Field of the invention

One or more embodiments of the present invention relate to a battery pack, and more particularly, to a structure of a battery pack.

### Description of Related Art

As the number of gasoline vehicles has increased, the amount of vehicle exhaust emission has also increased. Vehicle exhaust emission includes large amounts of harmful substances, such as nitrogen oxide due to combustion, carbon monoxide or hydrocarbon due to imperfect combustion, or the like, and is recognized as a serious environmental pollution problem. As fossil fuels are anticipated to be exhausted in the not too distant future, development of next generation energy sources and hybrid electric vehicles have become important issues. In terms of commercializing hybrid electric vehicles, mileage of such vehicles is determined by battery performance. In general, batteries do not have enough electrical energy for powering hybrid electric vehicles for a satisfactory period of time or mileage. If vehicles use energy sources such as gasoline, light oil, gas, or the like, the vehicles may quickly refuel in filling stations or gas charging stations. However, even when an electric charging station is available, it takes a long time to charge a hybrid electric vehicle, which is an obstacle to com<mercialization. Thus, with regard to hybrid electric vehicles, improving battery performance, compared to other technologies regarding hybrid electric vehicles, is recognized as an important problem.

### Summary of the invention

One or more embodiments of the present invention include a battery pack comprising a plurality of stacked battery modules each including secondary batteries, which prevents deviation of the secondary batteries by effectively supporting its weight and effectively emits gas, generated in the battery modules, to the outside. Additional aspects will be set forth in part in the description which follows and, in part, will be apparent from the description, or may be learned by practice of the presented embodiments.

According to one or more embodiments of the present invention, a battery pack comprising at least a first battery module and a second battery module, wherein the second battery module is arranged below the first battery module along a first direction. Each battery module comprises a plurality of secondary batteries stacked along a second direction, wherein at least one of the secondary batteries comprises a gas vent. Each battery module further comprises a top plate disposed on the top surface of the plurality of secondary batteries, and a bottom plate formed below the bottom surface of the plurality of secondary batteries, wherein the bottom plate of the first battery module and the top plate of the second battery module are contacting each other. Further, at least one opening is provided in the top plate corresponding to locations of the gas vent of the at least one secondary battery. The bottom plate of the first battery module and the top plate of the second battery module are configured to form a gas discharge path while contacting each other.

Thus, gas vented from the gas vents of the secondary batteries can be guided along the duct to the exterior.

A sealing member is preferably interposed between the bottom plate of the first battery module and the top plate of the second battery module for sealing therebetween.

Preferably, each secondary battery comprises a gas vent and openings are provided in the top plates corresponding to locations of the vents of the secondary batteries.

A sealing ring is preferably interposed between each of the openings of the top plate and the respective vents.

The top plate may comprise a first plate and a second plate extending upwardly from a longitudinal side of the first plate, and the bottom plate may comprise a third plate and a fourth plate extending downwardly from a longitudinal side of the third plate.

The battery pack may further comprise a pair of end plates disposed at both end portions of the secondary batteries along the second direction and the upper portions of the end plates of the second battery module may comprise a groove and at least one neighboring extending portion, wherein the groove is formed to receive the top plate of the second battery module and the bottom plate of the first battery module. The height of the extended portion is preferably less than a height of the bottom plate side portions plus the thickness of the base plate of the top plate.

The first and second battery modules may be connected to each other by connecting a lower end portion of the end plate of the first battery module with an upper end portion of the end plate of the second battery module such that the bottom plate of the first battery module is press fitted to the top plate of the second battery module.

The end plates of the first and second battery modules are preferably connected to each other by first and second connecting members.

A further gas discharge path may be separately formed on the top plate of the uppermost battery module of the stacked battery modules. The battery pack may further comprise gas ducts connected to each of the gas discharge paths. The battery pack comprises an outer sealing body for sealing the battery pack, the sealing body comprising an opening connected to a gas duct.

It is further provided a vehicle comprising a battery pack according to the invention. Each gas discharge path of the battery pack is preferably connected to an exhaust being located at an exterior of a passenger area of the vehicle.

In another embodiment, a battery pack includes a plurality of stacked battery modules, wherein each of the battery modules includes a plurality of secondary batteries arranged in a predetermined direction and electrically connected to one another; a pair of end plates disposed at both end portions of the secondary batteries; a restraint plate which compresses so that the secondary batteries do not extend in a longitudinal direction and is connected to side portions of the pair of end plates; a top plate connected to upper portions of the pair of end plates and forming an opening corresponding to a vent of the secondary batteries; and a bottom plate which is connected to lower portions of the pair of end plates to support the weight of the secondary batteries and is formed to correspond to a top plate of another of the battery modules disposed underneath such that the bottom plate serves as a duct for emitting gas when gas is generated in the vent of a secondary batteries of the other battery module disposed underneath.

An outlet may be connected to the bottom plate serving as a duct for emitting gas and the top plate of the other battery module disposed underneath to emit gas to the outside.

The battery pack may be used in an electric vehicle.

The battery pack may be sealed so that gas generated in the battery pack does not flow into the passenger area of the car and is emitted to the outside.

### Brief Description of the Drawings

These and other aspects will become apparent and more readily appreciated from the following description of the embodiments, taken in conjunction with the accompanying drawings of which:
FIG. 1 is a schematic perspective view of a battery pack including a plurality of battery modules disposed one above the other, according to an embodiment of the present invention;
FIG. 2 is an exploded perspective view of one of the battery modules illustrated in FIG. 1, according to an embodiment of the present invention;
FIG. 3 is a front view illustrating a state in which the battery modules of FIG. 1 are coupled, according to an embodiment of the present invention;
FIG. 4 is a schematic perspective view for describing gas emission from the battery modules, according to an embodiment of the present invention;
FIG. 5 is a schematic perspective view of a battery pack according to an embodiment of the present invention;
FIG. 6 is a schematic perspective view of a battery pack according to another embodiment of the present invention; and
FIG. 7 is a schematic conceptual diagram of a electric vehicle including the battery pack of FIG. 6, according to an embodiment of the present invention.
FIG. 8 is a schematic perspective view of a battery module according to another embodiment of the present invention.

### Detailed Description

Reference will now be made in detail to embodiments, examples of which are illustrated in the accompanying drawings, wherein like reference numerals refer to the like elements throughout. In this regard, the present embodiments may have different forms and should not be construed as being limited to the descriptions set forth herein. Accordingly, the embodiments are merely described below, by referring to the figures, to explain aspects of the present description.

First of all, a battery pack will be described. The battery pack may include a plurality of battery modules. Each of the battery modules may be formed by arranging a plurality of secondary batteries in a predetermined direction and electrically connecting the secondary batteries to each other. Each of the secondary batteries may be a lithium secondary battery. For example, each battery module may include twelve secondary batteries, and the battery pack may include eight battery modules stacked in four layers. However, the numbers of secondary batteries and battery modules are not limited thereto, and one of ordinary skill in the art would understand that various other configurations are possible. When each of the battery modules is formed by arranging the twelve secondary batteries to contact one another, a longitudinal center portion of the battery module in which the secondary batteries are arranged may deviate due to its own weight. Besides, lithium secondary batteries have along lifespan and light weight compared to general Ni-Cd, Ni-Mh batteries, or the like, but have a risk of explosion. When lithium secondary batteries explode due to overcharging, overdischarging, or another reason, a large amount of toxic gas is emitted.

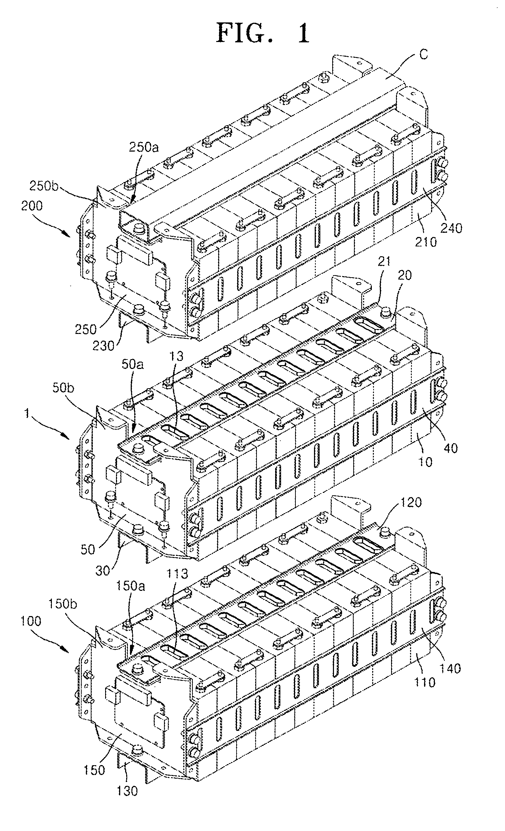

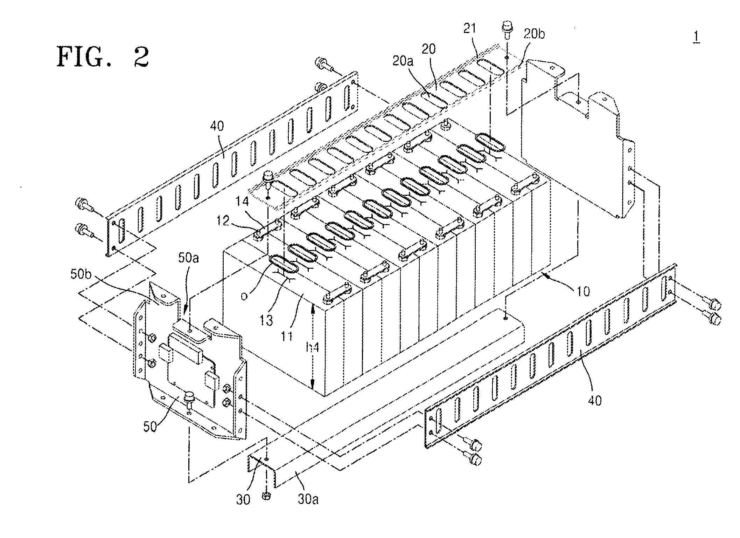

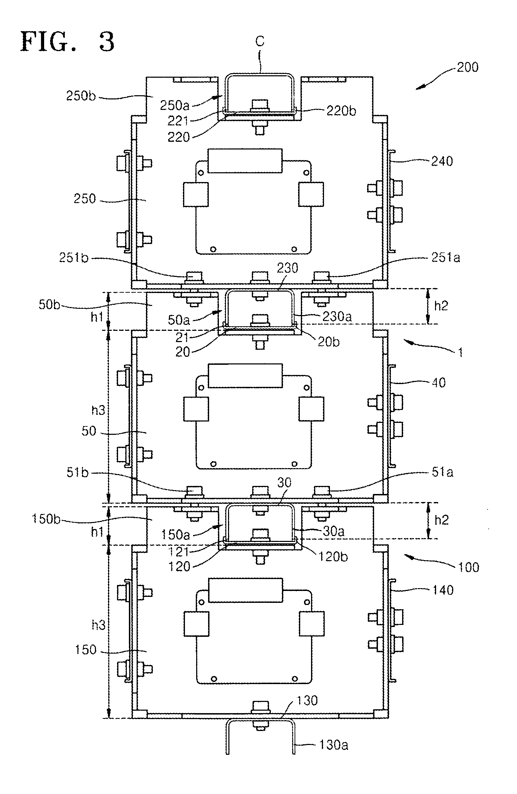

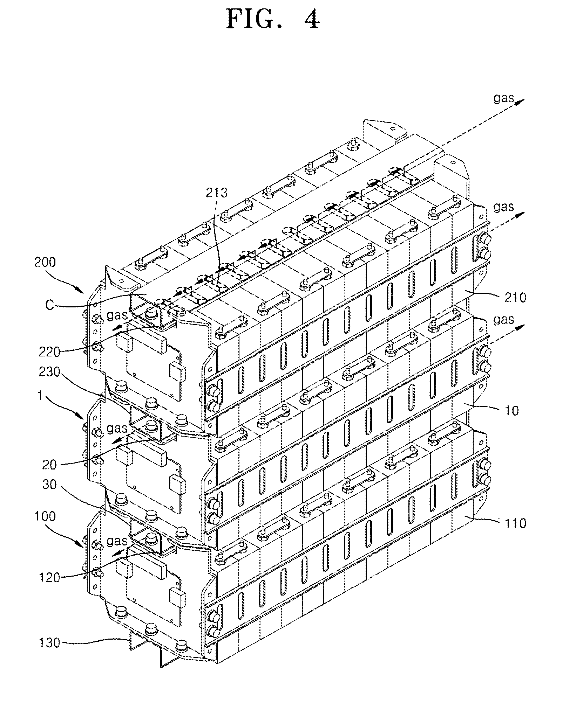

Accordingly, in FIGS. 1 through 4, a battery pack enhancing hardness and including a first battery module 1, a second battery module 100 and a third battery module 200 each including a duct in a bottom plate 30 thereof, wherein the duct allows a large amount of toxic gas, generated when a secondary battery 10 explodes, to be easily emitted, is illustrated. FIG. 1 is a schematic perspective view of the second battery module 100, the first battery module 1 and the third battery module 200 disposed one above the other, according to an embodiment of the present invention. FIG. 2 is an exploded perspective view of the first battery module 1 according to an embodiment of the present invention. FIG. 3 is a front view illustrating a state in which the second battery module 100, the first battery module 1 and the third battery module 200 are coupled to each other, according to an embodiment of the present invention. FIG. 4 is a schematic perspective view for describing gas emission from the second battery module 100, the first battery module 1 and the third battery module 200, according to an embodiment of the present invention. In FIGS. 3 and 4, the first and third battery modules 100 and 200 are respectively disposed below and above the first battery module 1. The components of the second battery module 100, the first battery module 1 and the third battery module 200 may be substantially the same and have been described above.

The battery pack includes the second battery module 100, the first battery module 1 and the third battery module 200 stacked on top of each other. Referring to FIG. 2, the first battery module 1 includes a plurality of secondary batteries 10, a top plate 20, a bottom plate 30, a restraint plate 40, and an end plate 50.

Each of the secondary batteries 10 includes an electrode assembly (not shown), a sealing body 11, and an electrode terminal 12. The electrode assembly includes an anode plate (not shown), a separator (not shown), and a cathode plate (not shown), and may be a winding type or a stack type assembly. The sealing body 11 accommodates the electrode assembly. The electrode terminal 12 may protrude from the sealing body 11 and electrically connect the secondary battery 10 with an external device. The sealing body 11 may include a vent 13. The vent 13 is formed to be easily perforated so that the gas generated in the sealing body 11 can perforate the vent 13 and be emitted to the outside through the perforated vent 13. The plurality of secondary batteries 10 facing one another may be arranged in a predetermined direction and are electrically connected to one another. In this regard, the secondary batteries 10 may be connected to one another in series or in parallel. To connect the secondary batteries 10 in series, anode plates and cathode plates of the secondary batteries 10 may be alternately arranged. The electrode terminals 12 of the secondary batteries 10 may be connected to each other by a bus bar 14

The electrode assembly of the secondary battery 10 containing lithium expands or contracts through charging or discharging. The expansion and contraction of the electrode assembly exerts a physical force on the sealing body 11, and thus the sealing body 11 expands and contracts physically according to changes of the electrode assembly. The changes of the sealing body 11 may be fixed by the repeated expansion and contraction, and the expansion increases resistance thereby decreasing efficiency of the secondary battery 10. Accordingly, the one pair of end plates 50 may be arranged in a predetermined direction to be respectively disposed at both end portions of the secondary batteries 10 electrically connected to one another. The restraint plate 40 is connected to a side portion of the end plate 50 to compress and fix the secondary batteries 10 so that there is no variation in a lengthwise direction of the secondary batteries 10 through expansion and contraction.

The top plate 20 is disposed on the plurality of secondary batteries 10 and connected to an upper portion of the end plate 50. Openings 20a formed in the top plate 20 are respectively disposed to correspond to the locations of the vents 13 of the secondary batteries 10. The size of the openings 20a may be slightly greater than the size of the vents 13. That is in a vertical projection, the circumference of a vent 13 would be fully enclosed by the circumference of an opening 20a. In other words, the cross section of the opening 20a may be greater than the cross section of the vent 13. Preferably, the location of their center points match in a horizontal projection. Even more preferably, the cross sections of the openings 20a and vents 13 are equal and their positions are matching such that the circumference of the openings 20a lies on top of the circumference of the vents 13 in a horizontal projection. The top plate 20 may include top plate side portions 20b formed on both longitudinal sides of the top plate 20 such that the top plate side portions 20b protrude upwards and the top plate 20 has a U shape. A first sealing member 21 formed of rubber is disposed in each of the top plate side portions 20b. Each of the openings 20a formed in the top plate 20 may include a sealing element, preferably a sealing ring O, between the top plate 20 and the corresponding vent 13, so that when gas is emitted from the vent 13, the gas does not affect the adjacent secondary battery 10 and is emitted through the opening 20a. The sealing ring O may be an O-shaped ring. A groove 50a is formed in an upper center portion of the end plate 50 to accommodate the top plate 20. The openings 20a of the top plate 20 may be disposed in close proximity to the secondary batteries 10. For example, a height h₃ between a bottom surface of the end plate 50 and a bottom surface of the groove 50a formed in the upper center portion of the ending plate 50 may be formed to be equal to or less than a height h₄ of the secondary batteries 10, so that the top plate 20 may be coupled to the end plate 50 without forming a space between the secondary batteries 10 and the top plate 20 with the sealing rings O interposed therebetween. When the top plate 20 is coupled to the end plate 50, the top plate 20 exerts pressure on the secondary batteries 10 and compresses the sealing rings O interposed between the secondary batteries 10 and the top plate 20, and thus the top plate 20 and the secondary batteries 10 may be sealed.

The bottom plate 30 is disposed under the secondary batteries 10 to support the weight of the plurality of secondary batteries 10, and is connected to a lower portion of the end plate 50.

Referring to FIG. 2, in order to withstand the weight of the secondary batteries 10, the bottom plate 30 may include bottom plate side portions 30a. The bottom plate side portions 30a may be formed on both longitudinal sides of the bottom plate 30 such that the bottom plate side portions 30a protrude downwards. The bottom plate side portions 30a form a path with the top plate 120 of the second battery module 100 underneath to serve as a duct for emitting gas when gas is generated. The bottom plate 30 of the first battery module 1 and the second top plate 120 of the second battery module 100, which is disposed under the bottom plate 30, may form a path for emitting gas when sealed, even if not perfectly sealed. When gas is generated in a secondary battery, explosion and rapid chemical reaction due to the explosion are accompanied, and thus a large amount of gas is generated explosively in a short time. Accordingly, when a duct for emitting gas is formed in a battery pack, gas may be easily emitted.

The shape of the bottom plate 30 when the battery modules 1 are stacked will be described with reference to FIG. 3. The battery pack may be formed by stacking the second battery module 100, the first battery module 1 and the third battery module 200 on top of one another. The number of stackable battery modules is not limited. However, for convenience of description, three battery modules, the second battery module 100, the first battery module 1 and the third battery module 200 are stacked in a triple-layered structure as illustrated in FIG. 3.

Referring to FIG. 3, the bottom plate 30 of the first battery module 1 will now be described. The bottom plate 30 of the first battery module 1 has a shape corresponding to that of the second top plate 120 of the second battery module 100. Referring to FIGS. 3 and 4, when gas is generated due to explosion in a secondary battery 110 of the second battery module 100, gas is emitted through the vents 113 of the second battery module 100, and the gas is emitted through a second opening part 120a of the second top plate 120. The bottom plate 30 and the second top plate 120 of the second battery module 100 correspond to each other to serve as a duct which is a path of gas emission. A second sealing member 121 may be interposed between the bottom plate 30 of the first battery module 1 and the second top plate 120 of the second battery module 100. The first, second and third sealing members 21, 121, and 221 may be formed of rubber and sealed by a tightening force between the bottom plate 30 and the second top plate 120. The bottom plate 30 and the second top plate 120 may be joined together by coupling the end plate 50 of the first battery module 1 with the second battery module 100 disposed under the first battery module 1. For example, in FIG. 3, the end plates 50 and 150 may be connected to each other by lower connecting members 51 a and 51 b. To enhance coherence between the bottom plate 30 and the second top plate 120, the second end plate 150 may have a shape in which a height h₁ of an extended portion 150b formed in an upper end portion of the second end plate 150 is less than a height h₂ of the bottom plate side portions 30a. That is, when the height h₂ of the bottom plate side portions 30a is greater than the height h₁ of the extended portion 150b formed in the upper end portion of the second end plate 150, coherence between the lower connecting members 51 a and 51 b is concentrated on between the bottom plate 30 and the second top plate 120 to seal them. In this regard, thicknesses of the second top plate 120 and the second sealing member 121 may be considered for coherence between the bottom plate 30 and the second top plate 120. That is, the second top plate 120, the second sealing member 121, and the bottom plate 30 are sequentially stacked, and the extended portion 150b formed in the upper end portion of the second end plate 150 and a lower portion of the end plate 50 are coupled by the lower connecting members 51 a and 51 b, and therefore, the thicknesses of the second top plate 120 and the second sealing member 121 affect coherence between the bottom plate 30 and the second top plate 120. That is, when the height h₁ of the extended portion 150b formed in the upper end portion of the second end plate 150 and the height h₂ of the bottom plate side portions 30a are determined, if the second top plate 120 and/or the second sealing member 121 are relatively thick, coherence between the bottom plate 30 and the second top plate 120 by the lower connecting members 51a and 51 b is enhanced.

The top plate 20 of the first battery module 1 corresponds to a third bottom plate 230 of the third battery module 200 disposed on the first battery module 1 to form a duct for emitting gas generated in the first battery module 1.

In FIG. 3, for example, the third battery module 200 is disposed uppermost among the first, second and third battery modules 1, 100, and 200. The third top plate 220 of the third battery module 200 may be covered with a duct for emitting gas. The duct covering the third top plate 220 may have various structures. For example, the third top plate 220 may be covered with a cover C to form an integrated pipe shape in a lengthwise direction. The height of the third top plate 220 covered with the cover C is not greater than that of an extended portion 250b formed in an upper end portion of the third battery module 200, and thus may be formed compact in size.

Referring to FIG. 4, the first, second and third top plates 20, 120, and 220 of the first, second and third battery modules 1, 100, and 200, which are sequentially stacked, and the first, second and third bottom plates 30, 130, and 230 are overlapped with one another, thereby forming ducts through which gas is emitted. That is, gas emitted from the vents 13, 113, and 213 of the secondary batteries 10 may be emitted to the outside though the ducts formed by overlapping the first, second and third top plates 20, 120, and 220 and the first, second and third bottom plates 30, 130, and 230.

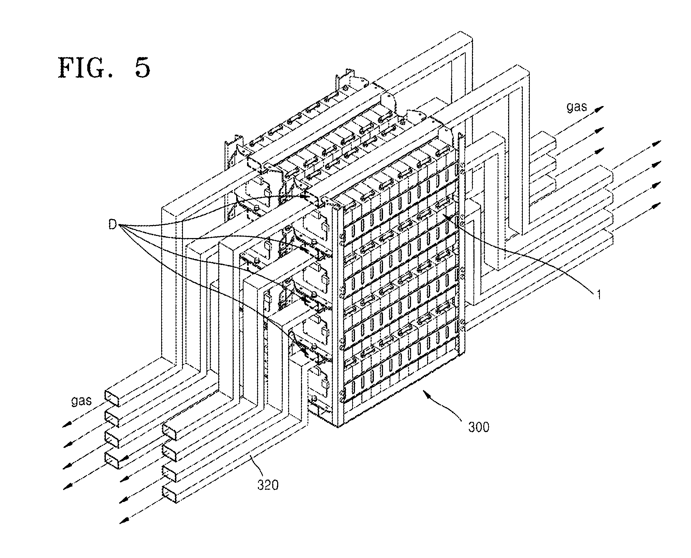

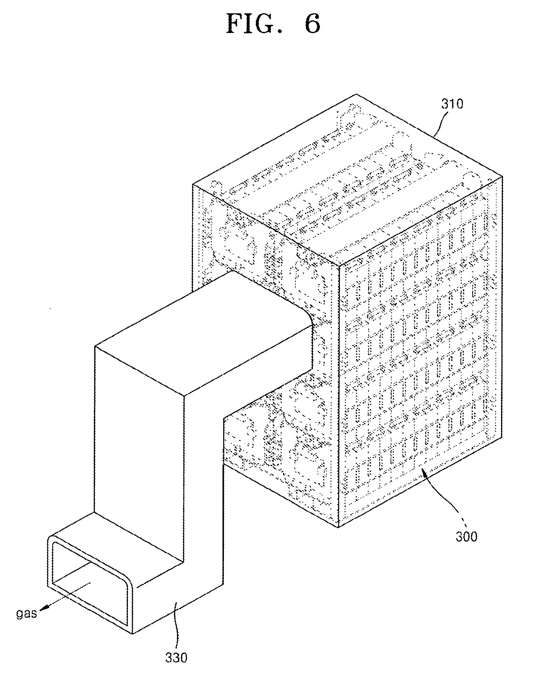

FIG. 5 is a schematic perspective view of a battery pack 300 according to an embodiment of the present invention. The battery pack 300 is formed by layering four battery modules 1 in two rows, that is, the battery pack 300 includes eight battery modules 1. Each battery module 1 includes twelve secondary batteries 10 arranged in a predetermined direction. In the battery module 1, the bottom plate 30 and the top plate 20(correspond to each other to form four degassing ducts D for emitting gas. Upper portions of the top plates 20 of the uppermost battery modules 1 may be covered, thereby also forming the degassing ducts D. Each duct D may be connected to an outlet 320 to emit gas to the outside. The method of emitting gas generated in the battery pack 300 to the outside is not limited thereto. For example, FIG. 6 is a schematic perspective view of a battery pack 300 according to another embodiment of the present invention. Referring to FIG. 6, by forming a battery pack sealing body 310 for sealing the battery pack 300, the gas generated in the battery pack 300 may be emitted through an outlet 320 connected to the battery pack sealing body 310. Gas may be emitted to the outside by not only forming ducts D in the battery pack 300, but by sealing the battery pack 300 with the battery pack sealing body 310.

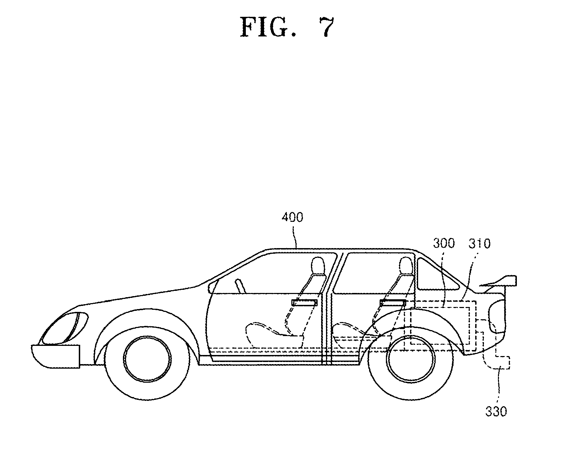

FIG. 7 is a schematic conceptual diagram of a electric vehicle 400 including the battery pack 300 of FIG. 6, according to an embodiment of the present invention. When the battery pack 300 including the secondary batteries 10 explodes or when gas is generated due to another reason, toxic gas is explosively generated in a short time. If the toxic gas flows into a space occupied by people, it may be harmful to the people. Accordingly, as illustrated in FIG. 5, the ducts D are formed in the battery pack 300 to emit the toxic gas to the outside of the electric vehicle 400. Alternatively, as illustrated in FIGS. 6 and 7, the battery pack 300 may be sealed with the battery pack sealing body 310 to emit the toxic gas through the outlet 320 to the outside of the electric vehicle 400.

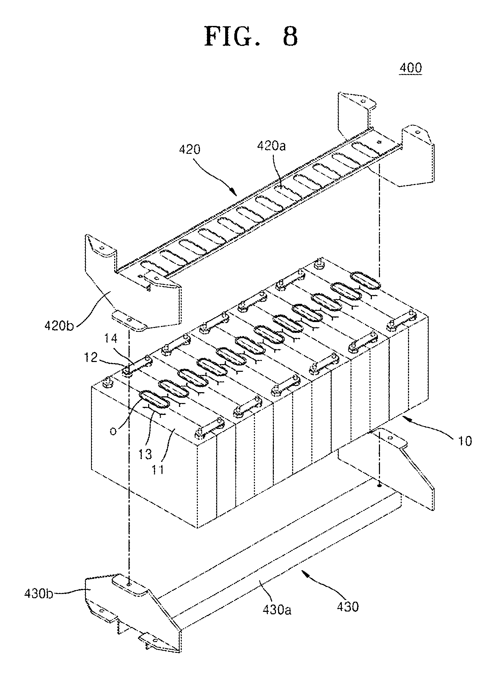

FIG. 8 is a schematic perspective view of a battery module 400 according to another embodiment of the present invention. Referring FIG. 8, a battery module 400 may include secondary batteries 10, a top plate 420, and a bottom plate 430.

Here, a plurality of secondary batteries may be stacked along a second direction. A top plate 420 may be disposed on the top surface of the plurality of secondary batteries 10. The end portions of the top plate 420a may be extended in a first direction Z to cover at least part of the side of the secondary batteries 10. The end portions of the top plate 420a may hold the secondary batteries 10. A bottom plate 430 may be formed below the bottom surface of the plurality of secondary batteries 10. The end portion of the bottom plate 430b may be extended to cover at least part of the side of the secondary batteries 10. Referring FIG. 8, the bottom plate 430 and the top plate 420 may connected to each other so as to accommodate the secondary batteries 10 therein. However, the ways of coupling between the top plate 420 and the bottom plate 430 are not limited thereto. For example, intervening elements may be disposed between the end portion of the top plate 420b and the end portion of the bottom plate 430b. Here, although not illustrated, the top plate 420 of the battery module 400 may contact to the bottom plate of the battery module which is arranged on the top of the battery module 400. Also, the bottom plate 430 of the battery module 400 may contact to the top plate of the battery module which is arranged below the battery module 400.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A battery pack comprising at least a first battery module (1) and a second battery module (100), the second battery module being arranged below the first battery module (1) along a first direction (Z), each of the first and second battery module (1) comprising:
a plurality of secondary batteries (10, 110) stacked along a second direction (Y), at least one of the secondary batteries (10, 110) comprising a gas vent (13, 113),
a top plate (20, 120) disposed on the top surface of the plurality of secondary batteries (10,110), and
a bottom plate (30, 130) formed below the bottom surface of the plurality of secondary batteries (10), wherein
the bottom plate (30) of the first battery module (1) and the top plate (120) of the second battery module (100) are contacting each other,
**characterized in that**
at least one opening (20a, 120a) is provided in the top plate (20, 120) corresponding to locations of the gas vent (13, 113) of the at least one secondary battery (10, 110), and
the bottom plate (30) of the first battery module (1) and the top plate (120) of the second battery module (100) are configured to form a gas discharge path (D) while contacting each other.

2. The battery pack of claim 1, wherein a sealing member (121) is interposed between the bottom plate (30) of the first battery module (1) and the top plate (120) of the second battery module (100) for sealing therebetween.

3. The battery pack of claim 1 or 2, wherein each secondary battery (10, 110) comprises a gas vent (13, 113) and openings (20a, 120a) are provided in the top plates (20, 120) corresponding to locations of the vents (13, 113) of the secondary batteries (10, 110).

4. The battery pack of claim 3, wherein a sealing ring (O) is interposed between each of the openings (20a, 120a) of the top plate (20, 120) and the respective vents (13, 113).

5. The battery pack (300) of any of the previous claims, wherein the top plate (120) comprises a first plate and a second plate (120b) extending upwardly from a longitudinal side of the first plate, and the bottom plate (30) comprises a third plate and a fourth plate (30a) extending downwardly from a longitudinal side of the third plate.

6. The battery pack of any of the previous claims, wherein the battery pack further comprises a pair of end plates (50, 150) disposed at both end portions of the secondary batteries (10, 110) along the second direction (Y) and the upper portions of the end plates (150) of the second battery module (100) comprise a groove (150a) and at least one neighboring extending portion (150b), wherein the groove (150a) is formed to receive the top plate (120) of the second battery module (100) and the bottom plate (30) of the first battery module (1).

7. The battery pack of claim 6, wherein the height (h1) of the extended portion (150b) is less than a height (h2) of the bottom plate side portions (30a) plus the thickness of the base plate of the top plate.

8. The battery pack of claims 6 or 7, wherein the first and second battery modules (1, 100) are connected to each other by connecting a lower end portion of the end plate (50) of the first battery module (1) with an upper end portion of the end plate (150) of the second battery module (100) such that the bottom plate (30) of the first battery module (1) is press fitted to the top plate (120) of the second battery module (100).

9. The battery pack of claim 8, wherein the end plates (50, 150) of the first and second battery modules (1, 100) are connected to each other by first and second connecting members (51 a, 51 b).

10. The battery pack of any of the previous claims, wherein a further gas discharge path (D) is separately formed on the top plate (20) of the uppermost battery module (1) of the stacked battery modules (1, 100).

11. The battery pack of any of the previous claims, wherein the battery pack further comprises gas ducts (320) connected to each of the gas discharge paths (D).

12. The battery pack of any of the previous claims 1 to 10, wherein the battery pack comprises an outer sealing body (310) for sealing the battery pack, the sealing body (310) comprising an opening connected to a gas duct (320').

13. A vehicle (400) comprising a battery pack (300) of one of the claims 1 to 12.

14. The vehicle (400) of claim 13, wherein each gas discharge path (D) of the battery pack (300) is connected to an exhaust (320) being located at an exterior of a passenger area of the vehicle (400).

## Patentansprüche

1. Batteriepack, umfassend mindestens ein erstes Batteriemodul (1) und ein zweites Batteriemodul (100), wobei das zweite Batteriemodul unterhalb des ersten Batteriemoduls (1) entlang einer ersten Richtung (Z) angeordnet ist, wobei das erste und zweite Batteriemodul (1) jeweils umfassen:
eine Vielzahl von Sekundärbatterien (10, 110), die entlang einer zweiten Richtung (Y) gestapelt sind, wobei mindestens eine der Sekundärbatterien (10, 110) eine Gasabzugsöffnung (13, 113) umfasst,
eine obere Platte (20, 120), die auf der oberen Fläche der Vielzahl von Sekundärbatterien (10, 110) angeordnet ist, und
eine untere Platte (30, 130), die unterhalb der unteren Fläche der Vielzahl von Sekundärbatterien (10) ausgebildet ist, wobei
die untere Platte (30) des ersten Batteriemoduls (1) und die obere Platte (120) des zweiten Batteriemoduls (100) miteinander in Kontakt sind,
**dadurch gekennzeichnet, dass**
mindestens eine Öffnung (20a, 120a) entsprechend Positionen der Gasabzugsöffnung (13, 113) der mindestens einen Sekundärbatterie (10, 110) in der oberen Platte (20, 120) vorgesehen ist, und
die untere Platte (30) des ersten Batteriemoduls (1) sowie die obere Platte (120) des zweiten Batteriemoduls (100) ausgestaltet sind, bei gegenseitiger Kontaktierung eine Gasentladungsstrecke (D) auszubilden.

2. Batteriepack nach Anspruch 1, wobei zwischen der unteren Platte (30) des ersten Batteriemoduls (1) und der oberen Platte (120) des zweiten Batteriemoduls (100) ein Dichtelement (121) zum Abdichten zwischen diesen eingefügt ist.

3. Batteriepack nach Anspruch 1 oder 2, wobei jede Sekundärbatterie (10, 110) eine Gasabzugsöffnung (13, 113) umfasst und Öffnungen (20a, 120a) entsprechend Positionen der Abzugsöffnungen (13, 113) der Sekundärbatterien (10, 110) in den oberen Platten (20, 120) vorgesehen sind.

4. Batteriepack nach Anspruch 3, wobei ein Dichtring (O) zwischen jeder der Öffnungen (20a, 120a) der oberen Platte (20, 120) und den jeweiligen Abzugsöffnungen 13, 113) eingefügt ist.

5. Batteriepack (300) nach einem der vorstehenden Ansprüche, wobei die obere Platte (120) eine erste Platte und eine von einer Längsseite der ersten Platte sich aufwärts erstreckende zweite Platte (120b) umfasst, und die untere Platte (30) eine dritte Platte und eine von einer Längsseite der dritten Platte sich abwärts erstreckende vierte Platte (30a) umfasst.

6. Batteriepack (300) nach einem der vorstehenden Ansprüche, wobei das Batteriepack ferner ein Paar von Endplatten (50, 150) umfasst, die an beiden Endabschnitten der Sekundärbatterien (10, 110) entlang der zweiten Richtung (Y) angeordnet sind, und die oberen Abschnitte der Endplatten (150) des zweiten Batteriemoduls (100) eine Nut (150a) und mindestens einen benachbarten verlängerten Abschnitt (150b) umfassen, wobei die Nut (150a) zur Aufnahme der oberen Platte (120) des zweiten Batteriemoduls (100) und der unteren Platte (30) des ersten Batteriemoduls (1) ausgebildet ist.

7. Batteriepack nach Anspruch 6, wobei die Höhe (h1) des verlängerten Abschnitts (150b) geringer ist als eine Höhe (h2) der Seitenabschnitte (30a) der unteren Platte plus der Dicke der Grundplatte der oberen Platte.

8. Batteriepack nach Anspruch 6 oder 7, wobei die ersten und zweiten Batteriemodule (1, 100) durch Verbinden eines unteren Endabschnitts der Endplatte (50) des ersten Batteriemoduls (1) mit einem oberen Endabschnitt der Endplatte (150) des zweiten Batteriemoduls (100) derart miteinander verbunden sind, dass die untere Platte (30) des ersten Batteriemoduls (1) mit der oberen Platte (120) des zweiten Batteriemoduls (100) verpresst ist.

9. Batteriepack nach Anspruch 8, wobei die Endplatten (50, 150) der ersten und zweiten Batteriemodule (1, 100) miteinander über erste und zweite Verbindungsglieder (51 a, 51 b) verbunden sind.

10. Batteriepack nach einem der vorstehenden Ansprüche, wobei eine weitere Gasentladungsstrecke (D) separat auf der oberen Platte (20) des obersten Batteriemoduls (1) der gestapelten Batteriemodule (1, 100) ausgebildet ist.

11. Batteriepack nach einem der vorstehenden Ansprüche, wobei das Batteriepack ferner miteinander verbundene Gaskanäle (320) der Gasentladungsstrecken (D) umfasst.

12. Batteriepack nach einem der vorstehenden Ansprüche 1 bis 10, wobei das Batteriepack ein äußeres Dichtungsgehäuse (310) zum Abdichten des Batteriepacks umfasst, wobei das Dichtungsgehäuse (310) eine mit einem Gaskanal (320') verbundene Öffnung umfasst.

13. Fahrzeug (400), umfassend ein Batteriepack (300) nach einem der Ansprüche 1 bis 12.

14. Fahrzeug (400) nach Anspruch 13, wobei jede Gasentladungsstrecke (D) des Batteriepacks (300) mit einem Auspuff (320) verbunden ist, der sich an einer Außenseite eines Fahrgastbereichs des Fahrzeuges (400) befindet.

## Revendications

1. Bloc de batteries comprenant au moins un premier module de batterie (1) et un deuxième module de batterie (100), le deuxième module de batterie étant disposé au-dessous du premier module de batterie (1) dans une première direction (Z), chacun des premier et deuxième modules de batterie (1) comprenant :
une pluralité de batteries secondaires (10, 110) empilées dans une deuxième direction (Y), au moins l'une des batteries secondaires (10, 110) comprenant un évent à gaz (13, 113),
une plaque supérieure (20, 120) disposée sur la surface supérieure de la pluralité de batteries secondaires (10, 110), et
une plaque inférieure (30, 130) formée au-dessous de la surface inférieure de la pluralité de batteries secondaires (10),
la plaque inférieure (30) du premier module de batterie (1) et la plaque supérieure (120) du deuxième module de batterie (100) étant en contact,
**caractérisé en ce que** :
au moins une ouverture (20a, 120a) est prévue dans la plaque supérieure (20, 120) correspondant à des emplacements de l'évent à gaz (13, 113) de l'au moins une batterie secondaire (10, 110), et
la plaque inférieure (30) du premier module de batterie (1) et la plaque supérieure (120) du deuxième module de batterie (100) sont configurées pour former une voie de décharge de gaz (D) lorsqu'elles sont en contact.

2. Bloc de batteries de la revendication 1, dans lequel un élément d'étanchéité (121) est interposé entre la plaque inférieure (30) du premier module de batterie (1) et la plaque supérieure (120) du deuxième module de batterie (100) pour assurer l'étanchéité entre elles.

3. Bloc de batteries de la revendication 1 ou 2, dans lequel chaque batterie secondaire (10, 110) comprend un évent à gaz (13, 113) et des ouvertures (20a, 120a) sont prévues dans les plaques supérieures (20, 120) correspondant à des emplacements des évents (13, 113) des batteries secondaires (10, 110).

4. Bloc de batteries de la revendication 3, dans lequel une bague d'étanchéité (O) est interposée entre chacune des ouvertures (20a, 120a) de la plaque supérieure (20, 120) et les évents respectifs (13, 113).

5. Bloc de batteries (300) de l'une quelconque des revendications précédentes, dans lequel la plaque supérieure (120) comprend une première plaque et une deuxième plaque (120b) s'étendant vers le haut à partir d'un côté longitudinal de la première plaque, et la plaque inférieure (30) comprend une troisième plaque et une quatrième plaque (30a) s'étendant vers le bas à partir d'un côté longitudinal de la troisième plaque.

6. Bloc de batteries de l'une quelconque des revendications précédentes, le bloc de batteries comprenant en outre une paire de plaques d'extrémité (50, 150) disposées au niveau des deux parties d'extrémité des batteries secondaires (10, 110) dans la deuxième direction (Y), et les parties supérieures des plaques d'extrémité (150) du deuxième module de batterie (100) comprennent une rainure (150a) et au moins une partie d'extension avoisinante (150b), la rainure (150a) étant formée pour recevoir la plaque supérieure (120) du deuxième module de batterie (100) et la plaque inférieure (30) du premier module de batterie (1).

7. Bloc de batteries de la revendication 6, dans lequel la hauteur (h1) de la partie d'extension (150b) est inférieure à une hauteur (h2) des parties latérales de la plaque inférieure (30a) plus l'épaisseur de la plaque de base de la plaque supérieure.

8. Bloc de batteries de la revendication 6 ou 7, dans lequel les premier et deuxième modules de batterie (1, 100) sont reliés l'un à l'autre en reliant une partie d'extrémité inférieure de la plaque d'extrémité (50) du premier module de batterie (1) à une partie d'extrémité supérieure de la plaque d'extrémité (150) du deuxième module de batterie (100) de sorte que la plaque inférieure (30) du premier module de batterie (1) soit montée avec serrage à la plaque supérieure (120) du deuxième module de batterie (100).

9. Bloc de batteries de la revendication 8, dans lequel les plaques d'extrémité (50, 150) des premier et deuxième modules de batterie (1, 100) sont reliées l'une à l'autre par des premier et deuxième éléments de raccordement (51 a, 51 b).

10. Bloc de batteries de l'une quelconque des revendications précédentes, dans lequel une voie de décharge de gaz supplémentaire (D) est séparément formée sur la plaque supérieure (20) du module de batterie le plus haut (1) des modules de batterie empilés (1, 100).

11. Bloc de batteries de l'une quelconque des revendications précédentes, le bloc de batteries comprenant en outre des conduits de gaz (320) reliés à chacune des voies de décharge de gaz (D).

12. Bloc de batteries de l'une quelconque des revendications précédentes 1 à 10, le bloc de batteries comportant un corps d'étanchéité extérieur (310) pour fermer hermétiquement le bloc de batteries, le corps d'étanchéité (310) comprenant une ouverture reliée à un conduit de gaz (320').

13. Véhicule (400) comprenant un bloc de batteries (300) de l'une quelconque des revendications 1 à 12.

14. Véhicule (400) selon la revendication 13, dans lequel chaque voie de décharge de gaz (D) du bloc de batteries (300) est reliée à un échappement (320) situé à l'extérieur d'un compartiment passagers du véhicule (400).
